Europäisches Patentamt

European Patent Office

Office européen des brevets

(11) Numéro de publication: **0 254 603 B1**

# FASCICULE DE BREVET EUROPEEN

(45) Date de publication de fascicule du brevet: **02.12.92**  (51) Int. Cl.⁵: **C08L 5/00**, B01J 2/16

(21) Numéro de dépôt: **87401208.1**

(22) Date de dépôt: **29.05.87**

(54) **Granules de biopolymère à dispersabilité et dissolution rapides.**

(30) Priorité: **19.06.86 FR 8608842**

(43) Date de publication de la demande:
**27.01.88 Bulletin  88/04**

(45) Mention de la délivrance du brevet:
**02.12.92 Bulletin  92/49**

(84) Etats contractants désignés:
**AT BE CH DE ES FR GB GR IT LI LU NL SE**

(56) Documents cités:
**EP-A- 125 516          EP-A- 0 180 366
FR-A- 2 516 527        GB-A- 2 086 204
US-A- 2 768 143        US-A- 3 850 838
US-A- 4 218 262**

**Römpps Chemie-Lexikon, 1981/5,page 986,
1126/7 et 2766;**

**Kirk-Othmer, Enc.Chem.Tech.3(1978) 884.**

**Lehrbuch der Lacke und Beschichtigugen,
Band 3, Verlag W.A. Colomb ,1976,
pp.239/253 et 260/261.**

**Kirk-Othmer,
Enc.Chem.Tech.22(1983)350-352.**

Enc. Pol. Sci. Eng. 2 (1986), p 286

(73) Titulaire: **RHONE-POULENC CHIMIE
25, quai Paul Doumer
F-92408 Courbevoie Cédex(FR)**

(72) Inventeur: **Vinot, Bernard
30, rue de Paradis
F-75010 Paris(FR)**

(74) Mandataire: **Seugnet, Jean Louis et al
RHONE-POULENC CHIMIE Direction de la
Propriété Industrielle 25, Ouai Paul Doumer
F-92408 Courbevoie Cedex(FR)**

**Description**

La présente invention est relative à des granulés de biopolymère, du type gomme xanthane et à leur procédé de préparation.

Les polysaccharides de haut poids moléculaire d'orgine microbienne, ou biopolymères, obtenus par fermentation d'un hydrate de carbone assimilable par un microorganisme approprié sont bien connus. L'exemple le plus représentatif de ces polysaccharides est la gomme xanthane. En raison de leurs propriétés épaississantes et de leur rhéologie, les polysaccharides ont trouvé des applications variées notamment dans le domaine alimentaire et dans les industries du bâtiment, de la peinture, du papier, du textile, des cosmétiques, des phytosanitaires, dans le traitement des eaux et dans l'industrie pétrolière par exemple pour le forage et la récupération assistée du pétrole.

Pour de nombreuses applications, il est nécessaire de mettre le biopolymère sous forme d'une solution aqueuse faiblement concentrée. Il est connu que l'inconvénient majeur des poudres de biopolymères est leur difficulté à se dissoudre rapidement même sous agitation à effet de cisaillement élevé. Sous l'effet d'une hydratation trop rapide, les grains au contact de l'eau s'entourent d'un mince film gélifié et s'agglomèrent. Ces agglomérats, ou grumeaux, entourés de polymère partiellement gonflé en surface, se désagrègent et se dissolvent difficilement.

Par ailleurs, la poudre de biopolymère, sous sa forme commerciale actuelle, pose des problèmes de sécurité en raison des particules fines responsables de nuages de poussières.

Des recherches intensives ont été menées depuis de nombreuses années pour tenter de résoudre ces problèmes. On a ainsi proposé différentes formulations en poudre ainsi que des compositions liquides à concentration élevée en matière active.

Des formulations en poudre sont décrites par exemple dans FR-A-2 487 368 qui préconise un enrobage par une couche protectrice d'un produit paraffinique s'éliminant dans l'eau chaude. Ce même type d'enrobage de la gomme xanthane mais avec des surfactants est également proposé dans le brevet US 4 218 262. US 2 768 143 propose pour sa part l'adjonction de sels alcalins ou alcalino-terreux d'acides minéraux ou organiques. Des granulés d'hydrocolloïdes insolubles dans l'alcool et comportant un hydrate de carbone liant soluble dans l'eau et l'alcool sont décrits dans US 3 850 838. Le brevet EP 125 516 propose également une composition liante de ce type pour des granulés de poudre de lait dégraissé, de poudre de maïs et de farine. FR-A-2 516 527 enseigne l'addition d'un matériau apportant de l'eau ou susceptible de la retenir par adsorption comme par exemple la silice. Ces formulations solides nécessitent pour être efficaces des quantités relativement importantes d'adjuvant dont la présence peut être nuisible dans certaines applications.

Les compositions liquides peuvent se présenter soit sous forme de suspensions dans un liquide organique non solvant du polymère (par exemple FR-A-2 531 093, FR-A-2 540 879, EP-A-0016640, EP-A-039128), soit sous forme d'émulsions (FR-A-2 548 676). Les compositions liquides présentent l'inconvénient d'un coût relativement élevé, dû au stockage et au transport d'une grande quantité de liquide.

Il existe donc toujours un besoin de disposer de polysaccharides qui soient de mise en oeuvre facile et qui ne présentent pas les inconvénients pré-cités.

L'invention a pour objectif de fournir des biopolymères sous une forme solide, ne contenant que peu d'additifs anti-agglomérants, dispersables instantanément dans l'eau et se dissolvant rapidement, même en eau très saline.

Selon la présente invention, les biopolymères sont caractérisés en ce qu'ils se présentent sous forme de granulés poreux contenant au moins un additif mouillant et/ou dispersant.

Ces granulés poreux sont obtenus par granulation en lit fluidisé d'une poudre de biopolymère.

Les biopolymères sont obtenus de manière connue par fermentation d'un hydrate de carbone sous l'action de microorganismes. La gomme xanthane est synthétisée à l'aide de bactéries appartenant au genre Xanthomonas et plus particulièrement aux espèces décrites dans Bergey's manual of determinative bacteriology (8e edition - 1974 - Williams N. Wilkins C° Baltimore) telles que Xanthomonas begoniae, Xanthomonas campestris, Xanthomonas carotae, Xanthomonas hederae, anthomonas incanae, Xanthomonas malvacearum, Xanthomonas papavericola Xanthomonas phaseoli, Xanthomonas pisi, Xanthomonas vasculorum, Xanthomonas vesicatoria, Xanthomonas vitians, Xanthomonas pelargonii. Parmi les autres microorganismes capables de produire des polysaccharides de propriétés similaires, on peut citer les bactéries appartenant au genre Arthrobacter et plus particulièrement les espèces Arthrobacter stabilis, Arthrobacter viscosus ; au genre Erwinia ; au genre Azotobacter et plus particulièrement l'espèce Azotobacter indicus ; au genre Agrobacterium et plus particulièrement les espèces Agrobacterium radiobacter, Agrobacterium rhizogènes, Agrobacterium tumefaciens ; ou les champignons appartenant au genre Sclerotium et plus particulièrement aux espèces Sclerotium glucanicum, Sclerotium rolfsii etc...

L'expérience a montré que certaines espèces sont capables de produire les polysaccharides avec une efficacité particulière. L'espèce X.campestris convient tout particulièrement bien pour la synthèse de la Gomme Xanthane.

La préparation de la gomme Xanthane est décrite dans de nombreuses publications et de nombreux brevets. On peut se référer par exemple aux brevets US-A-3.020.206, US-A-3.020.207, US-A-3.391.060, US-A-4.154.654.

Conventionnellement, le polysaccharide est isolé du moût de fermentation par évaporation, séchage et broyage ou par précipitation au moyen d'un alcool inférieur, séparation du liquide, séchage et broyage, de façon à obtenir une poudre. Les poudres disponibles commercialement ont une granulométrie généralement comprise entre 50 et 250 $\mu$m et une densité apparente supérieure à environ 0,7.

Les granulés poreux selon l'invention sont obtenus par granulation de la poudre en lit fluidisé. Selon le procédé, la poudre de biopolymère est mise en lit fluidisé à l'aide d'un courant gazeux, un fluide aqueux est pulvérisé sur la poudre pour agglomérer les particules, au moins un agent mouillant et/ou dispersant étant introduit soit en mélange avec la poudre de biopolymère, soit dans le fluide aqueux de pulvérisation, et les granulés obtenus sont séchés simultanément ou subséquemment.

L'agent mouillant est utile pour améliorer la dissolution ultérieure des granulés de polysaccharide. L'agent mouillant est choisi favorablement parmi les tensio-actifs anioniques et non ioniques suivants:

- les savons des acides gras tels que les sels de sodium ou de potassium d'acides gras saturés ou insaturés en $C_6$-$C_{24}$ ou de dérivés d'acides aminocarboxyliques comme le N-lauryl sarconisate de sodium
- les sulfates et produits sulfatés tels que les alcoylsulfates alcalins du type laurylsulfate de sodium ; les sulfates d'alcools gras polyoxyéthylénés ; les sulfates d'alcoylphénols polyoxyéthylénés ; les sulfates d'arylalkylphénols polyoxyéthylénés.
- les esters phosphoriques de dérivés oxyéthylénés tels que les phosphates d'alcools gras polyoxyéthylénés ; les phosphates d'alcoylphénols polyoxyéthylénés, les phosphates d'arylalkylphénols polyoxyéthylénés.
- les alcoylsulfonates par exemple les alkylsulfoesters des acides en $C_4$-$C_{30}$ du type dialkylsulfosuccinate de sodium ; les alcoylbenzènesulfonates comme le nonylbenzènesulfonate de sodium et le dodecylbenzènesulfonate de sodium ; les lignosulfonates,
- les alcoylphénols polyoxyéthylénés comme le nonylphénol polyoxyéthyléné et le dodécylphénol polyoxyéthyléné.
- les alcools gras et acides gras polyoxyéthylénés et/ou polyoxypropylénés.
- les alkanolamides d'acides gras polyoxyéthylénés et/ou polyoxypropylénés.
- les esters de polyols, comme les esters de glycérol ou de propylène glycol des acides gras, des huiles et graisses alimentaires, des mélanges d'acides gras et d'acide acétique et/ou lactique et/ou citrique et/ou tartrique ;
  les esters de saccharose tels que les sucro-esters et les sucroglycérides ; les esters d'acides gras de sorbitan ; et leurs dérivés polyoxyéthylénés et polyoxypropylénés comme les esters de polyéthylène-glycol ou de polypropylèneglycol polyoxyéthylénés, les esters de sorbitan polyoxyéthylénés, les esters d'acide tartrique polyoxyéthylénés,le glycérides oléiques polyoxyéthylénés.

Des agents mouillants trouvés particulièrement utiles sont le dodécyl benzène sulfonate de sodium, le dioctylsulfosuccinate de sodium et le nonylphénolpolyoxyéthyléné 10 OE. Les agents mouillants sont employés entre 0,5 et 10 % en poids du granulé, préférablement entre 0,5 et 5 %.

Un deuxième additif qui peut être inclus dans le granulé est un agent dispersant soluble dans l'eau. Des exemples d'agents dispersants sont les homopolymères des acides polycarboxyliques insaturés comme l'acide acrylique, l'acide maléique et leurs copolymères de bas poids moléculaire avec les a-oléfines en $C_2$-$C_{12}$ ou les composés vinyliques ; les alcenylsulfonates comme les sulfonates alcalins des $\alpha$-oléfines en $C_8$-$C_{20}$ ; les arylsulfonates et alcoylarylsulfonates comme les sels des acides naphtalène sulfonique et alcoylnaphtalène sulfonique et leurs produits de condensation avec le formaldéhyde ; les polyphosphates. L'agent dispersant est utilisé en quantité pouvant aller jusqu'à 10 %, préférablement 0,5 à 5 % en poids.

Le choix particulier d'un agent mouillant et/ou dispersant pourra être fait en fonction de l'application envisagée. Par exemple, dans le domaine alimentaire, on pourra utiliser des composés comme les sucroglycérides, les hexamétaphosphates, les tripolyphosphates.

En pratique, on utilisera avantageusement un additif présentant à la fois un bon pouvoir mouillant et un pouvoir dispersant ou une combinaison d'un agent mouillant et d'un agent dispersant. Une quantité totale d'additif(s) comprise entre 0,5 et 10 % en poids du granulé est généralement suffisante pour obtenir une excellente combinaison de la dispersibilité et de la solubilité. Des quantités supérieures pourraient cependant être utilisées en fonction de l'application visée et des propriétés spécifiques du ou des additifs.

L'additif mouillant-dispersant ou le mélange d'additifs peut être solide ou liquide et peut indifféremment soit être dissous dans l'eau de pulvérisation, soit s'il est solide être mélangé à la poudre de biopolymère.

Le pouvoir liant de la poudre de biopolymère permet sa granulation par pulvérisation sur cette poudre d'une solution aqueuse ne contenant pas d'agent spécifiquement liant.

Le fait de n'inclure aucun agent liant dans l'eau de pulvérisation a l'intérêt de conduire à une forme de granulés poreux résultant de l'agglomération des grains de polymère, par opposition à la technique consistant à inclure dans l'eau de pulvérisation un agent liant tel que le biopolymère lui-même, technique qui conduirait alors à des granulés denses difficiles à solubiliser.

Le lit fluidisé est produit par un courant gazeux qui a de préférence une température de 20 à 70°C, avec une vitesse linéaire de 0,7 à 5 m/sec. La quantité d'eau pulvérisée peut représenter 5 à 100 % de la masse à granuler. Le courant de gaz produisant le lit fluidisé et la quantité d'eau nécessaire à la granulation peuvent être avantageusement remplacés par un courant de vapeur humide ou saturée.

Si on le désire, diverses autres gommes peuvent être ajoutées en mélange avec la poudre de biopolymère de manière à obtenir un granulé d'un mélange homogène de gommes. Toutes les gommes naturelles, naturelles modifiées ou synthétiques peuvent être utilisées à cet effet. Parmi ces gommes, on cite plus particulièrement la gomme de caroube, la gomme de guar, les alginates, les carraghénates, les amidons et les dérivés cellulosiques.

Les granulés formés sont séchés soit simultanément dans le lit fluidisé par un courant chaud, soit subséquemment par tout moyen connu en soi, jusqu'à un taux d'humidité résiduelle ne dépassant pas normalement 12 %.

Par le procédé de l'invention, on obtient des granulés poreux ayant une dimension moyenne de 0,5 mm à 2 mm, avantageusement de 0,5 mm à 1 mm, une densité apparente inférieure à 0,7 plus particulièrement comprise entre 0,3 et 0,5. Le degré d'aération, exprimé par le rapport

$$1 - \left( \frac{\text{densité apparente granulés}}{\text{densité apparente poudre}} \right) 100 \text{ est compris entre 40 et 60 \%.}$$

Les granulés s'écoulent librement et ne forment pas de poussières pendant la manutention. Ils se dispersent instantanément dans l'eau sous faible agitation, sans nécessiter de précautions particulières et sans formation de grumeaux, améliorant ainsi le temps de mise en solution. On obtient ainsi rapidement une solution du biopolymère en versant la totalité des granulés en une seule fraction.

L'aptitude des granulés à se dissoudre plus rapidement que les poudres usuelles confirme leur intérêt pour leur emploi dans les applications alimentaires et dans toutes les industries requérant des fluides aqueux viscosifiés. Ils sont particulièrement appropriés pour être mis en oeuvre sur un site d'utilisation comme par exemple sur un champ pétrolier.

Les exemples suivants illustrent l'invention. Dans tous les exemples, le polysaccharide utilisé est la gomme xanthane commercialisée sous la dénomination RHODOPOL 23 ® par la Société Rhône-Poulenc Spécialités Chimiques. Ses caractéristiques sont les suivantes :

```
Etat physique...........................    poudre
Densité apparente (g/cm³)...............    0,8
Humidité................................    12 % maxi
Dimensions de particules................    < 250 µm
                                            dont 95 % < 175 µm
                                                 50 % <  75 µm
```

On utilise pour la granulation un granulateur de laboratoire à lit fluide AEROMATIC ® ayant un volume de 16,5 litres.

Les exemples 1 et 2 figurant ci-après, sont soumis à titre comparatif.

Exemple 1

200 g de la poudre de xanthane sont introduits dans le granulateur. La poudre est mise en lit fluidisé par injection d'air chauffé à 30°C avec un débit de 30 m³/heure. Par l'intermédiaire d'une buse bifluide (∅ = 0,5 mm) on pulvérise de l'eau à un débit de 20 ml/min. durant 5 minutes.

Les granulés obtenus sont séchés jusqu'à un contenu en humidité résiduelle de 10 %. Ils sont fluides, non collants et se dispersent instantanément dans l'eau. Leurs caractéristiques sont les suivantes :

```
dimensions................................... 0,5 - 1 mm
densité...................................... 0,35
degré d'aération............................. 60 %
```

Exemple 2

200 g de poudre xanthane sont mélangés dans un mélangeur ROWENTA ® avec 9 g de polyméthylène méthyl naphtalène sulfonate de sodium (SUPRAGIL ® MNS 90) et 1 g de dioctylsulfosuccinate de sodium. Le mélange de poudres est introduit dans le granulateur, fluidisé, granulé puis séché selon les conditions données dans l'exemple 1. Les caractéristiques des granulés (dimensions - densité - degré d'aération) sont identiques.

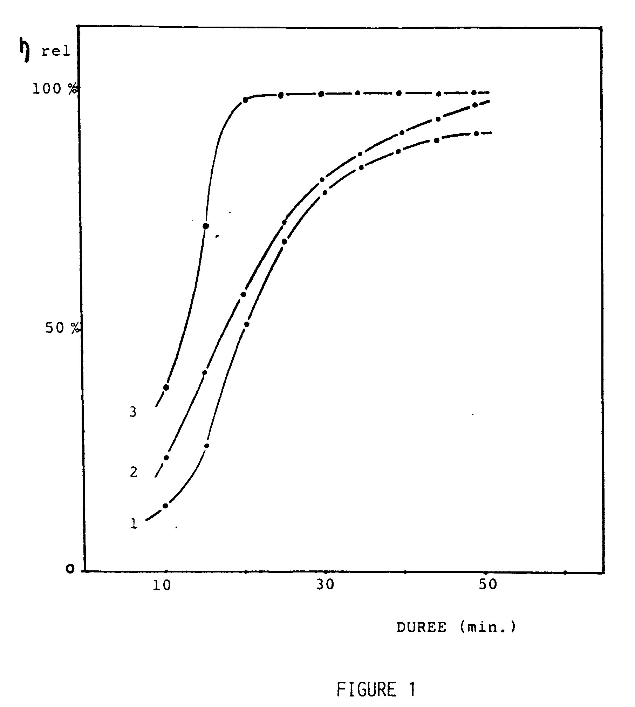

Les granulés des exemples 1 et 2 sont testés au regard de leur vitesse de dissolution : on prépare dans un becher une solution en versant sous faible agitation (barreau aimanté), en une seule fraction et sans aucune précaution 0,5 g de granulés dans 100 g d'eau de salinité 50 g/l en Na Cl et 5 g/l en Ca Cl₂ 2H₂O. L'agitation est maintenue jusqu'à obtention d'une viscosité constante. Les résultats sont représentés sur les courbes 2 (exemple 1) et 3 (exemple 2) de la figure 1, en comparaison avec la poudre initiale de xanthane (courbe 1).

Les viscosités relatives sont mesurées à l'aide d'un viscosimètre Brookfield ® LVT - vitesse 30 t/min - mobile n° 2 - 20°C.

Exemple 3

On procède à diverses granulations dans les mêmes conditions que l'exemple 1, à la différence que l'eau est remplacée par une solution aqueuse contenant divers additifs mouillants et dispersants. La concentration de la solution est ajustée de manière à obtenir les compositions figurant dans le Tableau 1.

Mouillants utilisés :

- dioctyl sulfosuccinate de Na
- dodécylbenzène sulfonate de Na
- Nonylphénol polyoxyéthyléné 10 OE
- Sucroglycérides d'huile de palme = CELYNOL ® P1M commercialisé par RHONE-POULENC
- Alcools gras OE-OP : SOPROPHOR ® BO 327 commercialisé par RHONE-POULENC

Dispersants :

- Copolymère anhydride maléique-diisobutylène ayant une masse moléculaire en poids d'environ 10.000 :
  SOPROPON ® T 36 K commercialisé par RHONE-POULENC.
- Polyméthylène naphtalène sulfonate de sodium : SUPRAGIL ® A commercialisé par RHONE-POULENC.

Mouillant-dispersant :

- Phosphate de tri-(phényl-1 éthyl) phénol polyoxyéthyléné 16 OE :
  SOPROPHOR ® 3 D 33 commercialisé par RHONE-POULENC.

A l'aide des granulés obtenus, on prépare des solutions à 5 000 ppm en xanthane, dans une eau de salinité 100 g/l Na Cl + 10 g/l Ca Cl₂, 2H₂O.

Les compositions des granulés et les résultats figurent dans le Tableau I suivant :

5

TABLEAU 1

| Composition du granulé en % | | Dispersabilité | Solubilité | Grosseur granulés |
|---|---|---|---|---|
| Xanthane | 95 | B | B<br>tendance à flotter<br>à la surface | ∼ 1 mm |
| Copolymère anhydride maléique-<br>diisobutylène (sel de K) | 5 | | | |
| Xanthane | 95 | TB | TB | ∼ 1 mm |
| Copolymère anhydride maléique-<br>diisobutylène (sel de K) | 4,5 | | | |
| Dioctylsulfosuccinate<br>de sodium | 0,5 | | | |

| | | | | |
|---|---|---|---|---|
| Xanthane<br>Nonylphénoloxyéthyléné | 97<br>3 | TB | TB | ~0,5 mm |
| Xanthane<br>Phosphate de tri(phényl-1<br>éthyl)phénol oxyéthyléné | 97<br><br>3 | TB | TB<br>tendance à flotter<br>à la surface | ~0,5 mm |
| Xanthane<br>Phosphate d'alkylphénol<br>oxyéthyléné<br>Dioctylsulfosuccinate<br>de sodium | 96,5<br><br>3<br><br>0,5 | TB | TB | ~0,5 mm |
| Xanthane<br>Polyméthylène naphtalène<br>sulfonate de sodium | 95<br><br>5 | B | B<br>tendance à flotter<br>à la surface | ~1 mm |
| Xanthane<br>Polyméthylène naphtalène<br>sulfonate de sodium<br>Dioctylsulfosuccinate<br>de sodium | 95<br><br>4,5<br><br>0,5 | TB | TB | ~0,5 - 1 mm |
| Xanthane<br>Dodecyl benzène<br>sulfonate de sodium | 95<br><br>5 | TB | TB | ~1 mm |
| Xanthane<br>Sucroglycéride<br>d'huile de palme | 99<br><br>1 | TB | TB | ~0,5 - 1 mm |
| Xanthane<br><br>Alcool gras OE-OP | 98,5<br><br>1,5 | TB | TB | ~0,5 - 1 mm |

TB : très bon – Solubilité < 30 min
B : bon – Solubilité < 45 min

**Revendications**

1. Granulés poreux de polysaccharide du type gomme xanthane caractérisés en ce qu'ils ont une dimension moyenne de 0,5 à 2 mm, une densité apparente inférieure à 0,7, un degré d'aération compris entre 40 et 60 %, un taux d'humidité allant jusqu'à environ 12 %, et en ce qu'ils contiennent entre 0,5 et 10 % en poids de granulé d'au moins un agent mouillant choisi parmi les savons d'acides gras, les sulfates et produits sulfatés, les esters phosphoriques de dérivés oxyéthylénés, les alcoyl sulfonates alcalins, les alcoxylbenzène sulfonates, les lignosulfonates, les alcoylphénols polyoxyéthylénés, les alcools gras et acides gras polyoxyéthylénés et/ou polyoxypropylénés, les alcanolamides d'acides gras, les esters de polyols et leurs dérivés polyoxyéthylénés et éventuellement jusqu'à 10 % en poids de granulé d'un agent dispersant choisi parmi les homopolymères des acides carboxyliques

7

insaturés et leurs copolymères avec les $\alpha$-oléfines, les alcenylsulfonates, les naphtalène - et alcoylnaphtalène sulfonates et les polyphosphates.

2. Granulés selon la revendication 1 caractérisés en ce que l'agent mouillant est un nonylphénolpolyoxyéthyléné, un alcoylbenzène sulfonate alcalin, un alkylsulfosuccinate alcalin, un sucroglycéride ou un alcool gras polyoxyéthyléné.

3. Granulés selon l'une des revendications 1 à 2 caractérisés en ce qu'ils contiennent un mélange de polyméthylènenaphtalènesulfonate de sodium et de dioctylsulfosuccinate de sodium.

4. Granulés selon l'une des revendications 1 à 3 caractérisés en ce que le polysaccharide de type gomme xanthane est en mélange avec une autre gomme naturelle, naturelle modifiée ou synthétique.

5. Procédé de préparation des granulés selon l'une des revendications 1 à 6 caractérisé en ce que la poudre de polysaccharide est mise en lit fluidisé à l'aide d'un courant gazeux, un fluide aqueux exempt d'un agent liant est pulvérisé sur la poudre pour agglomérer les particules, au moins un agent mouillant et éventuellement un agent dispersant étant introduit soit en mélange avec la poudre de polysaccharide, soit dans le fluide aqueux de pulvérisation, et les granulés obtenus sont séchés simultanément ou subséquement.

6. Procédé selon la revendication 5 caractérisé en ce que la quantité d'eau pulvérisée représente 5 à 100 % de la masse à granuler.

**Claims**

1. Porous polysaccharide granulates of the xanthan gum type, characterised in that they have an average size of 0.5 to 2 mm, an apparent density lower than 0.7, a degree of aeration of between 40 and 60 %, a moisture content of up to about 12 %, and in that they contain between 0.5 and 10 % by weight of granulate of at least one wetting agent chosen from among soaps of fatty acids, sulphates and sulphated products, phosphoric esters of oxyethylenated derivatives, alkali metal alkylsulphonates, alkoxybenzenesulphonates, lignosulphonates, polyoxyethylenated alkylphenols, polyoxyethylenated and/or polyoxypropylenated fatty alcohols and fatty acids, fatty acid alkanolamides, esters of polyols and their polyoxyethylenated derivatives and optionally up to 10 % by weight of granulate of a dispersing agent chosen from homopolymers of unsaturated carboxylic acids and their copolymers with $\alpha$-olefins, alkenylsulphonates, naphthalenesulphonates and alkylnaphthalenesulphonates and polyphosphates.

2. Granulates according to Claim 1, characterised in that the wetting agent is a polyoxyethylenated nonylphenol, an alkali metal alkylbenzenesulphonate, an alkali metal alkylsulphosuccinate, a sugar glyceride, or a polyoxyethylenated fatty alcohol.

3. Granulates according to one of Claims 1 and 2, characterised in that they contain a mixture of sodium polymethylenenaphthalenesulphonate and sodium dioctylsulphosuccinate.

4. Granulates according to one of Claims 1 to 3, characterised in that the polysaccharide of the xanthan gum type is mixed with another natural, modified natural or synthetic gum.

5. Process for the preparation of the granulates according to one of Claims 1 to 6, characterised in that the polysaccharide powder is placed in a fluidised bed using a stream of gas, an aqueous fluid free from binder is sprayed onto the powder to agglomerate the particles, at least one wetting agent and optionally a dispersing agent being introduced either mixed with the polysaccharide powder or in the aqueous fluid for spraying, and the granulates obtained are dried simultaneously or subsequently.

6. Process according to Claim 5, characterised in that the quantity of water sprayed represents 5 to 100 % of the mass to be granulated.

**Patentansprüche**

1. Poröses Granulat des Polysaccharids vom Typ eines Xanthangummis, dadurch gekennzeichnet, daß es einen mittleren Durchmesser von 0,5 bis 2 mm, eine scheinbare Dichte unter 0,7, einen Belüftungsgrad zwischen 40 und 60 %, einen Feuchtigkeitsgehalt bis zu 12 % besitzt und daß es zwischen 0,5 und 10 %, bezogen auf das Gewicht des Granulats, mindestens eines Netzmittels ausgewählt unter den Seifen von Fettsäuren, den Sulfaten und sulfatierten Produkten, den Phosphorsäureestern von Oxyethylenderivaten, den Alkalialkylsulfonaten, den Alkoxybenzolsulfonaten, den Ligninsulfonaten, den polyoxyethylierten Alkylphenolen, den polyoxyethylierten und/oder polyoxypropylierten Fettalkoholen oder Fettsäuren, den Amidoalkoholen von Fettsäuren, den Estern von Polyolen oder ihren polyoxyethylierten Derivaten und gegebenenfalls bis zu 10 %, bezogen auf das Gewicht des Granulats, eines Dispergiermittels ausgewählt unter den Homopolymeren ungesättigter Carbonsäuren oder ihren Copolymeren mit $\alpha$-Olefinen, Alkenylsulfonaten, Naphthalin- oder Alkylnaphthalinsulfonaten und den Polyphosphaten enthält.

2. Granulat nach Anspruch 1, dadurch gekennzeichnet, daß das Netzmittel ein polyoxyethyliertes Nonylphenol, ein Alkalialkylbenzolsulfonat, ein Alkalialkylsulfosuccinat, ein Sucroglycerid oder ein polyoxyethylierter Fettalkohol ist.

3. Granulat nach einem der Ansprüche 1 bis 2, dadurch gekennzeichnet, daß es ein Gemisch von Natriumpolymethylennaphthalinsulfonat und Natriumdioctylsulfosuccinat enthält.

4. Granulat nach einem der Ansprüche 1 bis 3, dadurch gekennzeichnet, daß das Polysaccharid vom Typ des Xanthangummis im Gemisch mit einem anderen natürlichen, modifizierten natürlichen oder synthetischen Gummi vorliegt.

5. Verfahren zur Herstellung des Granulats nach einem der Ansprüche 1 bis 6, dadurch gekennzeichnet, daß das Polysaccharidpulver mit Hilfe eines Gasstroms in eine Wirbelschicht überführt wird, daß eine wäßrige Flüssigkeit ohne Bindemittel über dem Pulver verstäubt wird, um die Teilchen zu agglomerieren, daß wenigstens ein Netzmittel und gegebenenfalls ein Dispergiermittel sei es im Gemisch mit dem Polysaccharidpulver, sei es in dem wäßrigen Medium der Zerstäubung zugegeben wird und daß das erhaltene Granulat gleichzeitig oder anschließend getrocknet wird.

6. Verfahren nach Anspruch 5, dadurch gekennzeichnet, daß die Menge des versprühten Wassers 5 bis 100 % der zu granulierenden Masse ausmacht.

FIGURE 1